# EUROPEAN PATENT SPECIFICATION

(11) **EP 0 897 829 B1**
(45) Date of publication and mention of the grant of the patent: **10.04.2002**
(21) Application number: 98115545.0
(22) Date of filing: 18.08.1998
(51) Int. Cl.: B60Q 1/068

(54) **Presetting arrangement for a vehicle headlight seating adjuster**
Voreinstellungseinrichtung zur Einstellung eines Kfz-Scheinwerfers
Dispositif de prépositionnement pour le positionnement d'un phare de véhicule

(30) Priority: 22.08.1997 IT TO970755
(43) Date of publication of application: 24.02.1999
(73) Proprietor: Automotive Lighting Italia Spa, 10078 Venaria Reale (Torino) (IT)
(72) Inventor: Cubito, Luciano, 10100 Torino (IT)
(74) Representative: Eccetto, Mauro

(56) References cited:
- EP-A- 0 769 417
- US-A- 5 497 301

## Description

The present invention relates to an assembly comprising a seating adjuster and a presetting arrangement for the seating adjuster on a vehicle headlight.

Vehicle headlight seating adjuster assemblies according the preamble of claim 1 are known in the prior art in which a sliding component, actuated manually or by means of a small electric motor, is connected to a corresponding portion of the headlight reflector: the movement of the sliding component determines the sloping of the reflector and a consequent variation in its orientation, so that it is thus possible to adapt the projector light beam to the various load conditions of the vehicle. The better known seating adjusters are of the "dynamic" or "step by step" types, in which the projector orientation adjustment is continuous or micrometric.

It is known that this type of seating adjusters requires an initial presetting at the time of installation of the headlight on the vehicle, necessitated owing to the inevitable presence of manufacturing clearances in the bodywork and clearances deriving from the assembly of the various components of the projector.

The dynamic seating adjusters at present available on the market do not have a static presetting arrangement, which does not call that is to say for the intervention of setting mechanisms for the actual seating adjuster. In consequence, the seating adjuster, being required to allow the compensation of such clearances, must be designed in such a way that its sliding component has an extended stroke which in use, proves of no use to cover the seating variations normally called for. Clearly this requirement has a negative effect upon dimensions, the complexity and the costs of production of the arrangement.

The purpose of the present invention is to achieve a presetting arrangement for a vehicle headlight seating adjuster which is free from the aforementioned inconveniences and which in particular will allow static compensation of the clearances deriving from the assembly of projector components and those of the bodywork manufacture, operating separately from the control mechanisms of the seating adjuster.

The said purpose is achieved by the present invention, in that it relates to an assembly comprising a vehicle headlight seating adjuster and a presetting arrangement for the said seating adjuster as claimed in claim 1.

In that manner, the arrangement according to the present invention allows the presetting of a seating adjustment for headlights of the dynamic type and of the relative projector, in order to recover the clearances deriving from the assembly of various components of the projector itself and those of the bodywork. The support component is effectively secured in a known manner, to the vehicle bodywork: the actuator means and the relative control means of the arrangement according to the invention allow integral displacement of the seating adjuster in relation to the support component, in such a way as to carry the sliding component of the adjuster so as to cooperate with the headlight reflector, thus obtaining the presetting thereof and cancelling the existing clearances, without necessitating the intervention of the actual seating adjuster control mechanisms. The arrangement according to the invention also proves of simple and economical design and can be effectively applied to whatsoever dynamic seating adjuster of the conventional type without requiring complex modifications and adaptations thereof, in that it maintains unchanged the structure, the electronic components and the procedure for securing it to the projector body.

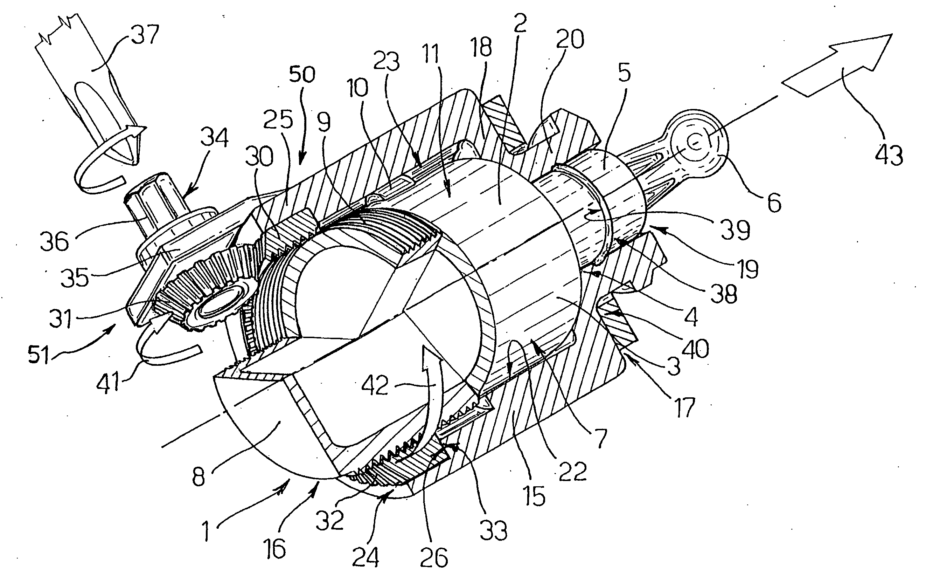

Other features and advantages of the invention will become clear from the description which follows of a non-restrictive operating example, also referring to the appended figure of the drawing, which is a part section perspective view of a presetting arrangement for a vehicle headlight seating adjuster manufactured according to the invention.

The figure shows in its arrangement according to reference 1 a presetting arrangement for a vehicle headlight seating adjuster 2, as known and not illustrated for the purpose of simplicity.

The seating adjuster 2 is of any known type, for instance electrically actuated, and comprises a main body 3 essentially cylindrical and housing the control mechanisms and from a first axial end 4 of which projects a longitudinal screw 5, coaxial with the main body 3 and axially sliding in relation to the latter when the said control mechanisms of the seating adjuster 2 are actuated; the screw 5 has a ball head 6, able to cooperate with a suitable matching component on the headlight reflector, as already known and not illustrated, for the purpose of modifying the orientation thereof.

According to the invention, a lateral external surface 7 of the main body 3 is provided as from a second end 8 of the main body 3 and opposing the end 4 and for a preset axial extension, with a threaded annular portion 9; the main body 3 also has a stop tooth 10 which extends radially in overhang from a non-threaded portion 11 of the lateral surface 7, comprised between the threaded portion 9 and the end 4.

The arrangement 1 comprises a support component for the seating adjuster 2 as defined, effectively in a non-restrictive manner illustrated in the figure, with an essentially cylindrical envelope 15, coaxial with the main body 3 of the seating adjuster 2, and externally radial in relation to the latter; the envelope 15 internally defines an essentially cylindrical seat 16 within which is located the body 3, as will be described further on in an axially sliding manner.

The envelope 15 is closed, at its one axial end 17 by a bottom wall 18, which has a passing hole 19, circular and concentric with the envelope itself, and a sleeve 20, which extends axially in overhang from the bottom wall 18, towards the outside of the envelope 15, and defines the hole 19; the sleeve 20 has an internal diameter such as to internally house the screw 5, which slides axially therein, and carries keyed to the outside against the wall 18, a flat annular seal 18, for instance made of rubber.

The envelope 15 is also provided on an internal radial lateral surface 22, with an axial opening 23, able to house the stop tooth 10 of the seating adjuster 2; as will be explained further on, the stop tooth 10 and the threaded portion 9 also form part of the arrangement assembly 1.

The envelope 15 has on its end 24 opposing its end 17, an internal cylindrical annular stop 25, coaxial with the envelope 15 and of an internal diameter greater than the internal diameter thereof; the difference in diameters between the stop 25 and the remainder of the envelope 15 defines inside the latter an axial shoulder 26 turned towards to the end 17 of the envelope 15.

The arrangement 1 also comprises a pair of toothed wheels 30, 31 with perpendicular axes, able to engage with each other. The toothed wheel 30 In particular is a circular ring, having a toothed side 32 with preset slope and an essentially flat side 33 opposing side 32. The toothed ring 30 is internally threaded in such a way as to admit in screw-like manner the threaded portion 9 of the main body 3 and has an external diameter such as to allow its free insertion, with a slight radial clearance, on the inside of the cylindrical stop 25 of the envelope 15; the ring 30 can thus connect in rotary manner with the stop 25 and its flat side 33 cooperates as a stop against the shoulder 26.

The toothed wheel 31 is instead a pinion, able to engage with the toothed side 32 of the ring 30; the pinion 31 is mounted at one end of a screw 34 inserted in rotary manner in a suitable seat of a support bracket 35 integral with the envelope 15. The screw 34 has on the side opposing the pinion 31, a control means 51, in effect an hexagonal head 36 having internally a seat for a screwdriver 37, for instance, of the cruciform type.

According to a preferred to form of implementation, in addition, the arrangement 1 comprises fluid-tight means 38, 40, located to protect the inside of the projector body (known and not illustrated), able to prevent the ingress therein of contaminants such as water, humidity, etc.; as an example, the securing means comprise a securing ring 38 in elastomer material (of an essentially known type), housed within a suitable annular seat 39 recessed in the screw 5 of the seating adjuster 2, quite apart from the flat seal 40 as quoted and bearing against the bottom wall 18.

The arrangement 1 according to the invention allows presetting of the dynamic seating adjuster 2 to compensate manufacturing and assembly clearances, without making use of the adjuster setting facility itself. According to the above description, in effect, the external part of the assembly formed by the seating adjuster 2 and the arrangement 1 is defined by the envelope 15, which is intended to be secured in a known manner, to the projector body; according to the invention therefore, the seating adjuster 2 is not secured integral with the projector body, as it presently occurs, but the support component suitably provided for in the arrangement 1, in effect the envelope 15; as an example the envelope 15 may have integral securing components, or be inserted into suitable seats, suitably recessed in the projector body and, thereby intended to remain fixed in relation to the vehicle bodywork. In addition, the threaded portion 9 of the seating adjuster 2, the threaded ring 30, the stop tooth 10 and the relevant opening 23 form as an assembly actuator means 50 able to effect the progressive micrometric adjustment of the whole of the seating adjuster 2 within the cylindrical seating 16, when activated by means of control means 51, consisting for instance of pinion 31, the relative screw 34 and the head 36 of the latter.

Once fitted to the vehicle the assembly formed by the seating adjuster 2 and the arrangement 1, acting on the pinion 31 with the aid of the screwdriver 37 (or whatsoever other tool able to engage into the hexagonal head 36), the internally threaded toothed ring 30 is brought into rotation, and being inserted freely inside the cylindrical stop 25 of the envelope 15, can rotate on the corresponding threaded portion 9 of the dynamic adjuster 2; the stop tooth 10 of the seating adjuster 2, engaging with the opening 23 recessed inside the envelope 15, will instead prevent the rotation of the dynamic adjuster 2, but does allow axial sliding within the seating 16, in the direction resulting from the rotation imparted to the pinion 31. As an example if the pinion 31 is rotated in the direction indicated by the arrow 41 illustrated in the figure, the resulting rotation of the threaded ring 30 occurs in the direction of the arrow 42 and the dynamic adjuster 2 is moved in the seating 16 in the direction indicated by the arrow 43. Vice versa, the rotation in the direction opposing the pinion 31 induces the sliding of the dynamic adjuster 2 in the opposing direction to that shown by the arrow 43.

In this way it is possible to axially displace back and forth, the main body 3 of the seating adjuster 2 together with the screw 5 integral therewith, which cooperates with the headlight reflector, carried in a mobile manner, in a known manner within the projector body, to orientate the reflector itself; the arrangement 1 thus allows preliminary adjustment of the orientation of the headlight which in turn allows the recovery of manufacturing and assembly clearances and does not require the intervention of the control mechanisms belonging to the dynamic seating adjuster 2. The actuator means 50, are in fact separate and independent from the control means as such of the seating adjuster 2; as the latter, as already known, achieve a sliding stroke of the component 5 in relation to the main body 3 of the seating adjuster 2, the actuator means 50 allow progressive micrometric displacement of the whole of the seating adjuster 2 (main body 3 and sliding component 5, fixed in relation to each other) within the cylindrical seat 16.

The presence of the securing ring 38 and of the seal 40 finally prevent the penetration of fluids inside the projector.

Finally it is clear that numerous modifications and variations can be made to the arrangement as described above. The scope of protection is only defined by the claims.

## Claims

1. An assembly comprising a seating adjuster (2) of a vehicle headlight and a presetting arrangement (1) for said seating adjuster, said seating adjuster (2) comprising a main body (3) and a component (5) sliding in relation to the said main body (3), said sliding component (5) being moveable in relation to the said main body (3), by means of a control mechanism housed within the said main body (3) and being able to cooperate with a suitable matching component of the said headlight for the purpose of adjusting the orientation thereof; **characterised by** that said presetting arrangement (1) comprises a support component (15) defining a seat (16) for the said seating adjuster (2), said seating adjuster (2) being mounted in sliding manner within the seat (16) along an axis of symmetry of the latter, actuator means (50) able to ensure a progressive micrometric displacement of said seating adjuster (2) within said seat (16), and control means (51) for activating said actuator means (50); said actuator means (50) being separate and operating independently from said control means (51) of the said seating adjuster (2).

2. An assembly according to claim 1, **characterised by** the fact that the said support component comprises an envelope (15) defining the said seat (16), the said main body (3) of the said seating adjuster (2) and the said seat (16) all being essentially cylindrical and coaxial, the said cylindrical body (3) being of axially sliding nature within the said seat (16); the said actuator means (50) comprise a threaded portion (9) of an externally radial lateral surface (7) of the said main body (3) of the seat adjuster (2), a circular ring (30) internally threaded, able to receive the said threaded portion (9) screwed therein, axial matching means (26) for the said threaded ring (30) and stop means (10, 23) able to prevent the rotation of the said main body (3) of the seat adjuster (2) in relation to the said seat (16).

3. An assembly according to claim 2, **characterised by** the fact that the said envelope (15) has at a first axial end (24), an internal cylindrical annular stop (25), coaxial with the envelope (15) and of greater internal diameter than the internal diameter of the same; the said threaded ring (30) having an external diameter such as to be inserted freely, with a slight radial clearance, inside the said cylindrical stop (25); the said axial matching means comprise an axial shoulder (26) able to cooperate with a stop with a first essentially flat side (33) of the said threaded ring (30), the said shoulder (26) being defined inside the envelope (15), closer to the first end (24) of the latter, of the difference in diameter between the internal cylindrical stop (25) of the envelope (15) and the remainder of the latter, and being turned towards a second end (17) of the envelope (15) opposing the said first end (24).

4. An assembly according to claim 3, **characterised by** the fact that the said threaded ring (30) is also provided with a second threaded side (32), opposing the said first flat side (33) and having a preset slope in relation to the latter; the said control means (51) comprising a toothed wheel (31) able to engage with the said toothed side (32) of the threaded ring (30), and integrally keyed to one end of a screw (34), the said screw (34) being inserted in a rotary manner in a support bracket (35) integral with the said envelope (15) and having on the opposite side to the said toothed wheel (31), gripping means (36) able to allow the rotation of the said screw (34) in relation to the said bracket (35).

5. An assembly according to claim 4, **characterised by** the fact that the said stop means comprise at least one stop tooth (10) extending radially in overhang from a non-threaded portion (11) of the side surface (7) of the said main body (3) of the seating adjuster (2); the said stop tooth (10) engaging in a relative matching seat (23) recessed in a radially internal side surface (22) of the said envelope (15).

6. An assembly according to claim 5, **characterised by** the fact that the said envelope (15) is closed, at its said second end (17), by a bottom wall (18), which has a passing circular hole (19) concentric with the said envelope (15), and a sleeve (20) which extends axially in overhang from the said bottom wall (18), towards the outside of the envelope (15), and defines a hole (19), able to internally receive with a radial clearance the said sliding component (5) of the seat adjuster (2).

7. An assembly according to claim 6, **characterised by** the fact that it comprises fluid sealing means; the said fluid sealing means comprise at least ring (38) in elastomer material housed within a relative annular seat (39) recessed in the said sliding component (5) of the seat adjuster (2), and a flat annular seal (40) keyed in stop-like manner against the bottom wall (18); the said ring (38) and seal (40) being able to cooperate in a fluid-type manner with the said sleeve (20) to prevent the ingress of fluids inside a projector body of the said headlight.

## Patentansprüche

1. Baueinheit, die eine Montagesitz-Einstelleinrichtung (2) eines Fahrzeugscheinwerfers und eine Voreinstellanordnung (1) für die Montagesitz-Einstelleinrichtung umfaßt, wobei die Montagesitz-Einstelleinrichtung (2) einen Hauptkörper (3) und eine in bezug auf den Hauptkörper (3) gleitende Komponente (5) umfaßt, wobei die Gleitkomponente (5) in bezug auf den Hauptkörper (3) mittels eines Steuermechanismus beweglich ist, der im Hauptkörper (3) untergebracht ist und mit einer geeigneten Einstellkomponente des Scheinwerfers zusammenwirkt, um dessen Orientierung einzustellen; **dadurch gekennzeichnet, daß** die Voreinstellanordnung (1) eine Trägerkomponente (15), die einen Sitz (16) für die Montagesitz-Einstelleinrichtung (2) definiert, wobei die Montagesitz-Einstelleinrichtung (2) im Sitz (16) so angebracht ist, daß sie längs einer Symmetrieachse des letzteren gleiten kann, Aktuatormittel (50), die eine progressive mikrometrische Verschiebung der Montagesitz-Einstelleinrichtung (2) innerhalb des Sitzes (16) gewährleisten, sowie Steuermittel (51) zum Aktivieren der Aktuatormittel (50), umfaßt; wobei die Aktuatormittel (50) von den Steuermitteln (51) der Montagesitz-Einstelleinrichtung (2) getrennt sind und unabhängig hiervon arbeiten.

2. Baueinheit nach Anspruch 1, **dadurch gekennzeichnet, daß** die Trägerkomponente eine den Sitz (16) definierende Hülle (15) umfaßt, wobei der Hauptkörper (3) der Montagesitz-Einstelleinrichtung (2) und der Sitz (16) im wesentlichen zylindrisch und koaxial sind und der zylindrische Körper (3) so beschaffen ist, daß er im Sitz (16) axial gleitet; und die Aktuatormittel (50) einen Gewindeabschnitt (9) einer radial äußeren seitlichen Oberfläche (7) des Hauptkörpers (3) der Montagesitz-Einstelleinrichtung (2), einen Kreisring (30) mit Innengewinde, der den Gewindeabschnitt (9), der in ihn geschraubt ist, aufnehmen kann, Axialeinstellmittel (26) für den Gewindering (30) sowie Anschlagmittel (10, 23), die die Drehung des Hauptkörpers (3) der Montagesitz-Einstelleinrichtung (2) in bezug auf den Sitz (16) verhindern können, umfassen.

3. Baueinheit nach Anspruch 2, **dadurch gekennzeichnet, daß** die Hülle (15) ein erstes axiales Ende (24) und einen inneren, zylindrischen, ringförmigen Anschlag (25) besitzt, der zur Hülle (15) koaxial ist und einen Innendurchmesser aufweist, der größer als der Innendurchmesser der Hülle (15) ist; wobei der Gewindering (30) einen Außendurchmesser besitzt, derart, daß er mit einem geringen radialen Spiel in den zylindrischen Anschlag (25) frei eingeführt werden kann; wobei die Axialeinstellmittel eine axiale Schulter (26) umfassen, die mit einem Anschlag mit einer ersten im wesentlichen flachen Seite (33) des Gewinderings (30) zusammenwirken kann, wobei die Schulter (26) in der Hülle (15) näher am ersten Ende (24) der letzteren durch die Durchmesserdifferenz zwischen dem inneren, zylindrischen Anschlag (25) der Hülle (15) und dem Rest der letzteren definiert ist und zu einem zweiten Ende (17) der Hülle (15), das dem ersten Ende (24) gegenüberliegt, gerichtet ist.

4. Baueinheit nach Anspruch 3, **dadurch gekennzeichnet, daß** der Gewindering (30) außerdem gegenüber der ersten flachen Seite (33) mit einer zweiten Gewindeseite (32) versehen ist, die eine im voraus festgelegte Neigung in bezug auf die jene besitzt; die Steuermittel (51) ein Zahnrad (31) aufweisen, das mit der gezahnten Seite (32) des Gewinderings (30) in Eingriff gelangen kann und mit einem Ende der Schraube (34) einteilig verkeilt ist, wobei die Schraube (34) drehbar in einen Trägerarm (35) eingeführt ist, der einteilig mit der Hülle (15) ausgebildet ist und auf der dem Zahnrad (31) gegenüberliegenden Seite Greifmittel (36) besitzt, die die Drehung der Schraube (34) in bezug auf den Arm (35) ermöglichen.

5. Baueinheit nach Anspruch 4, **dadurch gekennzeichnet, daß** die Anschlagmittel wenigstens einen Anschlagzahn (10), der sich von einem gewindefreien Abschnitt (11) der Seitenoberfläche (7) des Hauptkörpers (3) der Montagesitz-Einstelleinrichtung (2) radial überstehend erstreckt; wobei der Anschlagzahn (10) in einem Relativeinstellsitz (23), der in einer radial inneren Seitenoberfläche (22) der Hülle (15) ausgespart ist, in Eingriff ist.

6. Baueinheit nach Anspruch 5, **dadurch gekennzeichnet, daß** die Hülle (15) an ihrem zweiten Ende (17) durch eine Bodenwand (18) verschlossen ist, die ein kreisförmiges Durchgangsloch (19), das zur Hülle (15) konzentrisch ist, sowie eine Hülse (20) umfaßt, die sich von der Bodenwand (18) axial überstehend zur Außenseite der Hülle (15) erstreckt und ein Loch (19) definiert, das innen mit einem radialen Spiel die Gleitkomponente (5) der Montagesitz-Einstelleinrlchtung (2) aufnehmen kann.

7. Baueinheit nach Anspruch 6, **dadurch gekennzeichnet, daß** sie Fluiddichtungsmittel umfaßt; wobei die Fluiddichtungsmittel wenigstens einen Ring (38) aus einem elastomeren Werkstoff, der in einem zugehörigen ringförmigen Sitz (39) untergebracht ist, der in der Gleitkomponente (5) der Montagesitz-Einstelleinrichtung (2) ausgespart ist, sowie eine flache ringförmige Dichtung (40), die wie ein Anschlag an der Bodenwand (18) verkeilt ist, umfassen; wobei der Ring (38) und die Dichtung (40) fluidartig mit der Hülse (20) zusammenwirken können, um ein Eindringen von Fluiden in einen Projektorkörper des Scheinwerfers zu verhindern.

## Revendications

1. Ensemble comprenant un organe de réglage d'assise (2) d'un phare de véhicule et un dispositif de prépositionnement (1) pour ledit organe de réglage d'assise, ledit organe de réglage d'assise (2) comprenant un corps principal (3) et un composant (5) coulissant relativement audit corps principal (3), ledit composant coulissant (5) pouvant être déplacé par rapport audit corps principal (3) au moyen d'un mécanisme de commande, logé à l'intérieur dudit corps principal (3), et étant apte à coopérer avec un composant complémentaire approprié dudit phare, dans le but de régler l'orientation de celui-ci, **caractérisé en ce que** ledit dispositif de prépositionnement (1) comprend un composant de support (15) définissant un siège (16) pour ledit organe de réglage d'assise (2), ledit organe de réglage d'assise (2) étant monté à coulissement dans le siège (16) le long d'un axe de symétrie de ce dernier, des moyens d'actionnement (50) aptes à assurer un déplacement micrométrique progressif dudit organe de réglage d'assise (2) à l'intérieur dudit siège (16), et des moyens de commande (51) destinés à rendre actifs lesdits moyens d'actionnement (50); lesdits moyens d'actionnement (50) étant séparés et agissant indépendamment desdits moyens de commande (51) dudit organe de réglage d'assise (2).

2. Ensemble selon la revendication 1, **caractérisé par le fait que** ledit composant de support comprend une enveloppe (15) définissant ledit siège (16), ledit corps principal (3) dudit organe de réglage d'assise (2) et ledit siège (16) étant tous essentiellement cylindriques et coaxiaux, ledit corps cylindrique (3) étant de nature à coulisser axialement à l'intérieur dudit siège (16); lesdits moyens d'actionnement (50) comprennent une partie filetée (9) d'une surface latérale (7), extérieurement radiale, dudit corps principal (3) de l'organe de réglage d'assise (2), un anneau circulaire (30) fileté intérieurement, apte à recevoir ladite partie filetée (9) vissée dedans, des moyens d'adaptation axiale (26) pour ledit anneau fileté (30) et des moyens d'arrêt (10, 23) aptes à empêcher la rotation dudit corps principal (3) de l'organe de réglage d'assise (2) par rapport audit siège (16).

3. Ensemble selon la revendication 2, **caractérisé par le fait que** ladite enveloppe (15) comporte, à une première extrémité axiale (24), une butée annulaire cylindrique intérieure (25), coaxiale à l'enveloppe (15) et d'un diamètre intérieur plus grand que le diamètre intérieur de cette dernière; ledit anneau fileté (30) possédant un diamètre extérieur tel, qu'il soit inséré librement, avec un léger jeu radial, à l'intérieur de ladite butée cylindrique (25); lesdits moyens d'adaptation axiale comprennent un épaulement axial (26) apte à coopérer avec une butée constituée par une première face sensiblement plate (33) dudit anneau fileté (30), ledit épaulement (26) étant défini à l'intérieur de l'enveloppe (15), plus près de la première extrémité (24) de cette dernière, sur la différence de diamètre entre la butée cylindrique intérieure (25) de l'enveloppe (15) et la partie restante de cette dernière, et étant tourné vers une seconde extrémité (17) de l'enveloppe (15), opposée à ladite première extrémité (24).

4. Ensemble selon la revendication 3, **caractérisé par le fait que** ledit anneau fileté (30) est également pourvu d'une seconde face dentée (32), opposée à ladite première face plate (33) et présentant une inclinaison préétablie par rapport à cette dernière; lesdits moyens de commande (51) comprenant une roue dentée (31) apte à engrener avec ladite face dentée (32) de l'anneau fileté (30) et clavetée à une extrémité d'une vis (34) pour en être solidaire, ladite vis (34) étant insérée, libre en rotation, dans une patte de support (35) solidaire de ladite enveloppe (15) et comportant, du côté opposé à ladite roue dentée (31), des moyens d'accrochage (36) aptes à permettre la rotation de ladite vis (34) par rapport à ladite patte (35).

5. Ensemble selon la revendication 4, **caractérisé par le fait que** lesdits moyens d'arrêt comprennent au moins une dent d'arrêt (10) s'étendant radialement, en saillie, sur une partie non filetée (11) de la surface latérale (7) dudit corps principal (3) de l'organe de réglage d'assise (2); ladite dent d'arrêt (10) venant en prise dans un siège complémentaire associé (23) creusé dans une surface latérale (22), radialement intérieure, de ladite enveloppe (15).

6. Ensemble selon la revendication 5, **caractérisé par le fait que** ladite enveloppe (15) est fermée, à sa dite seconde extrémité (17), par une paroi de fond (18), qui présente un trou circulaire de traversée (19), concentrique à ladite enveloppe (15), et un manchon (20) qui s'étend axialement, en saillie, depuis ladite paroi de fond (18), vers l'extérieur de l'enveloppe (15), et définit un trou (19), apte à recevoir intérieurement, avec un jeu radial, ledit composant coulissant (5) de l'organe de réglage d'assise (2).

7. Ensemble selon la revendication 6, **caractérisé par le fait qu'**il comprend des moyens d'établissement d'une étanchéité aux fluides; lesdits moyens d'établissement d'une étanchéité aux fluides comprennent au moins une bague (38) en un matériau élastomère, logée dans un siège annulaire associé (39) creusé dans ledit composant coulissant (5) de l'organe de réglage d'assise (2), et une garniture d'étanchéité annulaire plate (40) clavetée, à la manière d'une butée, contre la paroi de fond (18); ladite bague (38) et ladite garniture d'étanchéité (40) étant aptes à coopérer, d'une manière étanche aux fluides, avec ledit manchon (20), afin d'empêcher l'entrée de fluides à l'intérieur d'un corps de projecteur dudit phare.
